# EUROPÄISCHE PATENTSCHRIFT

(11) **EP 3 325 310 B1**
(45) Veröffentlichungstag und Bekanntmachung des Hinweises auf die Patenterteilung: **09.09.2020**
(21) Anmeldenummer: 16734001.7
(22) Anmeldetag: 04.07.2016
(51) Int. Cl.: B60N 2/20, B60N 2/22, B60N 2/36

(54) **FAHRZEUGSITZ**
VEHICLE SEAT
SIÈGE DE VÉHICULE

(30) Priorität: 20.07.2015 DE 102015213621; 30.09.2015 DE 102015218873
(43) Veröffentlichungstag der Anmeldung: 30.05.2018
(73) Patentinhaber: Adient Luxembourg Holding S.à r.l., 1855 Luxembourg (LU)
(72) Erfinder: KREUELS, Olaf, 66482 Zweibruecken (DE); WOLF, Christian, 67811 Dielkirchen (DE); SIMO, Jan, 91101 Trencin (SK)
(74) Vertreter: Liedhegener, Ralf
(86) Internationale Anmeldenummer: PCT/EP2016/065704
(87) Internationale Veröffentlichungsnummer: WO 2017/012847

(56) Entgegenhaltungen:
- WO-A1-2008/019033
- DE-A1-102006 001 530
- DE-A1-102013 215 028

## Beschreibung

Die Erfindung betrifft einen Fahrzeugsitz, insbesondere Kraftfahrzeugsitz, mit einem Sitzteil, einer gegenüber dem Sitzteil um eine Lehnendrehachse schwenkbaren Lehne, mindestens einem Sitzschienenpaar zur Längsverstellung des Fahrzeugsitzes, einer Verriegelungsvorrichtung zur Verriegelung des mindestens einen Sitzschienenpaars, wobei zur Anlenkung der Lehne an dem Sitzteil wenigstens ein verriegelbarer Beschlag vorgesehen ist, und die Lehne, in eine zur leichteren Zugänglichkeit einer hinteren Sitzreihe einnehmbare Easy-Entry-Stellung verschwenkbar ist.

### Stand der Technik

Im Stand der Technik sind verschiedene Easy-Entry-Systeme für Fahrzeugsitze bekannt, welche einen erleichterten Einstieg in eine zweite oder dritte Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt.

Ist der Fahrzeugsitz zudem auf Schienen angeordnet, kann der Fahrzeugsitz bei Betätigung des Entriegelungshebels zusätzlich oder alternativ in Fahrtrichtung aus dem Einstiegsbereich heraus verschiebbar sein. Hierbei ist es üblicherweise vorgesehen, dass eine Verriegelungsvorrichtung des Sitzschienenpaares mittels eines von der Schwenkbewegung der Lehne betätigten Bowdenzugs durch das Vorschwenken der Lehne des Fahrzeugsitzes entriegelt wird. Des Weiteren kann der Fahrzeugsitz eine Komfortverstellung der Rückenlehne und eine Ladebodenfunktion aufweisen. Diese beiden Funktionen sind üblicherweise mittels eines Komforthebels betätigbar.

Darüber hinaus sind Fahrzeugsitze bekannt, welche zur Vergrößerung des Ladebodens in eine flache Bodenstellung, auch Flat-Floor-Stellung genannt, überführt werden können. Derartige Systeme zur Überführung des Fahrzeugsitzes in die flache Bodenstellung sind, neben einer am Fahrzeugsitz angeordneten Auslösung, bevorzugt ebenfalls mittels einer Fernauslösung von einem dem Fahrzeugsitz entfernten Bereich des Ladebodens aus betätigbar. Bei bekannten Systemen führt ein Betätigen der Fernauslösung in an sich bekannter Weise jedoch lediglich zu einem Verschwenken der Lehne bis in die Easy-Entry-Stellung, wobei ein weiteres Vorklappen selbst nach wiederholtem Betätigen der Fernauslösung aufgrund eines Entgegenwirkens des an der Lehne angreifenden Bowdenzugs nicht erfolgt. Zudem werden hierbei üblicherweise die Schienen des Fahrzeugsitzes mit entriegelt.

Aus der DE 10 2013 215 028 A1 ist ein Easy-Entry-System für einen Fahrzeugsitz bekannt, welches zumindest einen Beschlag mit wenigstens einer Beschlagkomponente und einem Mitnahmeprofil aufweist. Die wenigstens eine Beschlagkomponente ist mit einem Übertragungselement gekoppelt und ein Entriegelungshebel des Easy-Entry-Systems ist zumindest mittelbar mit dem Übertragungselement verbunden. Ein Komforthebel einer Rückenlehne steht mit dem Mitnahmeprofil in Eingriff und ein Schwenkbereich der Rückenlehne ist bei ausgelöster Easy-Entry-Funktion mittels einer in den zumindest einen Beschlag eingreifenden Sperrklinke begrenzt. Ein Eingriff der Sperrklinke in den zumindest einen Beschlag ist durch Betätigen des Komforthebels zur Verstellung einer Position der Rückenlehne aufhebbar.

Aus der WO 2008/019033 A1 ist ein Fahrzeugsitz bekannt, welcher zwischen einer ersten Position und einer zweiten Position bewegbar ist, und eine Sitzlehne, ein Sitzkissen und einen Längseinsteller umfasst. Der Fahrzeugsitz umfasst zudem einen Lehnenbeschlag, der mit der Sitzlehne und dem Sitzkissen verbunden ist. Der Fahrzeugsitz umfasst ferner einen mit dem Lehnenbeschlag gekoppelten Verstaumechanismus zum Verstauen des Fahrzeugsitzes im Fahrzeugboden und einen mit dem Lehnenbeschlag und dem Verstaumechanismus gekoppelten Easy-Entry-Mechanismus, wobei der Easy-Entry-Mechanismus nicht betätigt ist, wenn der Verstaumechanismus betätigt ist und der Easy-Entry-Mechanismus betätigt ist, wenn der Staumechanismus nicht betätigt ist.

### Aufgabe

Der Erfindung liegt die Aufgabe zu Grunde, einen Fahrzeugsitz der eingangs genannten Art zu verbessern, insbesondere eine Funktionstrennung zur Überführung in die Easy-Entry-Stellung und die Flat-Floor-Stellung vorzunehmen.

### Lösung

Diese Aufgabe wird erfindungsgemäß durch einen Fahrzeugsitz mit den Merkmalen des Anspruches 1 gelöst.

Ein Fahrzeugsitz, insbesondere Kraftfahrzeugsitz, weist einen hinteren Fuß, eine gegenüber dem hinteren Fuß um eine Lehnendrehachse schwenkbare Lehne, und mindestens ein Sitzschienenpaar zur Längsverstellung des Fahrzeugsitzes, sowie eine Verriegelungsvorrichtung zur Verriegelung des mindestens einen Sitzschienenpaars auf. Zur Anlenkung der Lehne an dem hinteren Fuß ist wenigstens ein verriegelbarer Beschlag vorgesehen, und die Lehne ist in eine zur leichteren Zugänglichkeit einer hinteren Sitzreihe einnehmbare Easy-Entry-Stellung verschwenkbar.

Hierbei weist der Fahrzeugsitz eine an einem Antriebselement angeordnete Klinke auf, welche beim Verschwenken der Lehne in die Easy-Entry-Stellung von einem an der Lehne angeordneten Mitnehmer erfassbar ist und hierdurch der Bewegung der Lehne folgend mitführbar ist. Ferner ist ein Betätigungshebel vorgesehen, mittels welchem derart auf die Klinke einwirkbar ist, so dass beim Verschwenken der Lehne die Klinke durch den Mitnehmer nicht erfassbar ist und die Lehne über die Easy-Entry-Stellung hinweg verschwenkbar ist.

Dadurch, dass der Betätigungshebel, insbesondere zur vollständigen Überführung der Lehne in eine sogenannte Bodenstellung, eine Mitnahme der Klinke durch den Mitnehmer der Lehne verhindert, wird insbesondere eine Entriegelung der Verriegelungsvorrichtung des Sitzschienenpaares verhindert, so dass der Fahrzeugsitz während der Einnahme der Bodenstellung seine Schienenlängseinstellung nicht unbeabsichtigt verändert, und zudem ein Stoppen oder Blockieren der Lehne in der Easy-Entry-Stellung verhindert wird.

Vorteilhafte Ausgestaltungen, welche einzeln oder in Kombination miteinander eingesetzt werden können, sind Gegenstand der Unteransprüche.

Hierbei kann es weiter vorgesehen sein, dass die Klinke drehbar gelagert ist, wodurch diese einen einem vorherrschenden Neigungswinkel der Lehne entsprechend angepassten Kontakt zum Mitnehmer der Lehne halten kann, wodurch ferner die Übertragung einer Antriebskraft zur Bewegung des Antriebselements möglich ist.

Des Weiteren kann es von Vorteil sein, wenn das Antriebselement um die Lehnendrehachse drehbar gelagert ist, insbesondere fluchtend zu einer Entriegelungsachse des Beschlages angeordnet ist. Hierbei lässt sich eine Übertragung einer Betätigungskraft des Bestätigungshebels besonders einfach auf einen fluchtenden Beschlag oder eine fluchtende Übertragungsstange eines Beschlages übertragen.

Ferner kann an dem Antriebselement ein Zugelement angeordnet sein, welches zum Betätigen der Verriegelungsvorrichtung des Sitzschienenpaars auf einen Bowdenzug wirkt. Somit kann eine einfache Möglichkeit der Verbindung des Antriebselements mit einem Bowdenzug einer Schienenverriegelung bereitgestellt werden.

Es ist ferner vorteilhaft, wenn an dem hinteren Fuß eine Grundplatte zur Lagerung des Antriebselements angeordnet ist, um gegebenenfalls eine einheitlich zu produzierende und modulare Anbindung für das Antriebselement sowie gegebenenfalls weiteren mit dem Antriebselement zusammenwirkenden Anbauteilen bereitzustellen. Beispielsweise kann im Falle eines vorgesehenen Bowdenzuges dieser in einer Haltevorrichtung der Grundplatte befestigt sein, insbesondere ein Endabschnitt einer Hülle des Bowdenzugs gehalten sein.

Alternativ oder zusätzlich kann der Betätigungshebel mittels eines ersten Federelements, insbesondere einer Zugfeder, in Richtung einer Grundstellung des Betätigungshebels vorgespannt sein. Dies stellt sicher, dass der Betätigungshebel federbelastet in einer Grundstellung, welche auch als Normalstellung bezeichnet sein kann, gehalten wird, wenn dieser nicht von einer Betätigungskraft bewegt wird.

Es ist ebenso möglich, dass die Klinke mittels eines zweiten Federelements mit dem Betätigungshebel verbunden ist, wobei das zweite Federelement die Klinke als Druckfeder wirkend in eine Grundstellung der Klinke bewegt, wenn der Betätigungshebel in seiner Grundstellung ist, und wobei das zweite Federelement die Klinke als Zugfeder wirkend in eine von ihrer Grundstellung abweichende Stellung bewegt, wenn der Betätigungshebel gegenüber seiner Grundstellung in eine Betätigungsrichtung verschwenkt ist. Ein derartiges zweites Federelement stellt in vorteilhafter Weise sicher, dass, im Falle eines sich in einer Grundstellung befindlichen Betätigungshebels, die Klinke ebenfalls in einer entsprechenden Grundstellung gehalten ist.

Ferner kann es vorgesehen sein, dass das Antriebselement mittels eines dritten Federelements, insbesondere einer Zugfeder, in Richtung einer Grundstellung des Antriebselements vorgespannt ist, wodurch die Möglichkeit geschaffen wird, dass das Antriebselement in einer Grundstellung, oder auch Normalstellung, gehalten ist, in welcher das Antriebselement einen möglicherweise verbundenen Bowdenzug nicht betätigt.

Ferner kann die Klinke, zur Begrenzung des Verschwenkens der Lehne, in der Easy-Entry-Stellung an einem Endanschlag anliegen. Hierbei kann der Fahrzeugsitz mit einer in ihrer Schwenkbewegung begrenzten Lehne, bei Erreichen eines entsprechenden Neigungswinkels der Lehne, in einer weiteren Bewegung des Fahrzeugsitzes in Längsrichtung des Sitzschienenpaares, durch Ausnutzung einer Bewegungsenergie der Lehne, weiter in die Easy-Entry-Stellung verfahren werden.

Soll der Fahrzeugsitz in eine Bodenstellung überführt werden, so kann es vorteilhaft sein, wenn, zur Begrenzung des Verschwenkens der Lehne, der Mitnehmer in einer Bodenstellung an einem Endanschlag anliegt. Dies hat den Vorteil, dass die Lehne nicht über eine mittels des Endanschlags vorgegebene Endposition hinaus verschwenkt wird und somit die Rückseite der Lehne, welche in der Bodenstellung in den umgebenden Ladeboden einschwenkt, möglichst eben mit dem Ladeboden fluchtet.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Seitenansicht eines erfindungsgemäßen Fahrzeugsitzes,
- Fig. 2:: eine schematische Darstellung eines Betätigungshebels gemäß einer möglichen Ausführungsform der Erfindung,
- Fig. 3:: eine schematische Darstellung eines Zugelementes gemäß einer möglichen Ausführungsform der Erfindung,
- Fig. 4:: eine schematische Darstellung einer Grundplatte gemäß einer möglichen Ausführungsform der Erfindung,
- Fig. 5:: eine schematische Darstellung eines Antriebselements gemäß einer möglichen Ausführungsform der Erfindung,
- Fig. 6:: eine schematische Darstellung einer Klinke gemäß einer möglichen Ausführungsform der Erfindung,
- Fig. 7:: eine schematische Darstellung eines Mitnehmers gemäß einer möglichen Ausführungsform der Erfindung,
- Fig. 8:: eine schematische Darstellung eines Teilausschnitts des Fahrzeugsitzes in einer Grundstellung,
- Fig. 9:: eine schematische Darstellung eines Teilausschnitts des Fahrzeugsitzes in einem Zustand beim Betätigen der Easy-Entry-Funktion,
- Fig. 10:: eine schematische Darstellung des Teilausschnitts von Fig. 9 mit entferntem Betätigungshebel,
- Fig. 11:: eine schematische Darstellung eines Teilausschnitts des Fahrzeugsitzes in einer Easy-Entry-Stellung,
- Fig. 12:: eine schematische Darstellung des Teilausschnitts von Fig. 11 mit entferntem Betätigungshebel,
- Fig. 13:: eine schematische Darstellung eines Teilausschnittes des Fahrzeugsitzes in einem Zustand beim Betätigen des Betätigungshebels,
- Fig. 14:: eine schematische Darstellung eines Teilausschnittes des Fahrzeugsitzes in einem Zustand mit teilweise vorgeschwenkter Lehne, und
- Fig. 15:: eine schematische Darstellung eines Teilausschnittes des Fahrzeugsitzes in einem Zustand mit vollständig vorgeschwenkter Lehne.

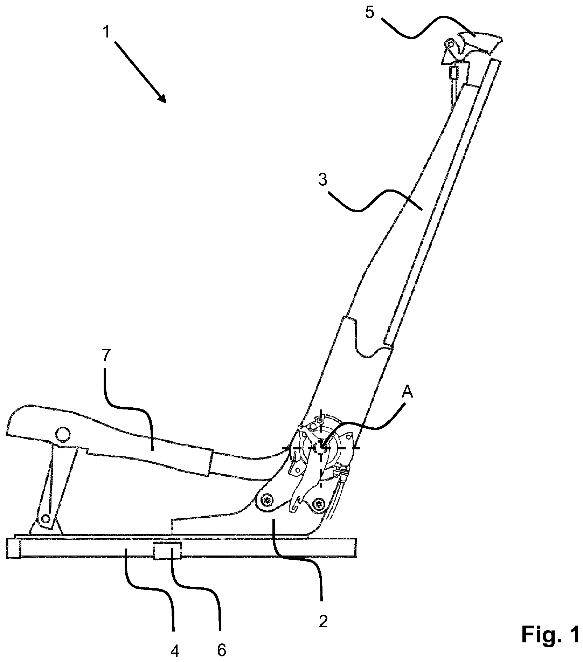

In Fig. 1 ist ein erfindungsgemäßer Fahrzeugsitz 1 in einer Seitenansicht dargestellt. Der Fahrzeugsitz 1 weist einen hinteren Fuß 2, eine gegenüber dem hinteren Fuß 2 um eine Lehnendrehachse A schwenkbare Lehne 3, und mindestens einem Sitzschienenpaar 4 zur Längsverstellung des Fahrzeugsitzes 1, sowie eine Verriegelungsvorrichtung 6 zur Verriegelung des mindestens einen Sitzschienenpaars 4 auf. Der hintere Fuß 2 ist vorliegend an einer Oberschiene des Sitzschienenpaares 4 befestigt. Zur Anlenkung der Lehne 3 ist an dem hinteren Fuß 2 wenigstens ein verriegelbarer Beschlag vorgesehen, und die Lehne 3 ist in eine zur leichteren Zugänglichkeit einer hinteren Sitzreihe einnehmbare Easy-Entry-Stellung verschwenkbar. Der Beschlag ist hierbei fluchtend mit der Lehnendrehachse A angeordnet. Das Sitzteil 7 ist mit der Lehne 3 verbunden.

Vorliegend weist der Fahrzeugsitz 1 eine an einem um die Achse A drehbar gelagerten Antriebselement 18 angeordnete Klinke 24 auf, welche beim Verschwenken der Lehne 3 in die Easy-Entry-Stellung von einem an der Lehne 3 angeordneten Mitnehmer 26 erfassbar ist und hierdurch der Bewegung der Lehne 3 folgend mitgeführt ist.

Ferner ist ein Betätigungshebel 22 vorgesehen und dazu eingerichtet, derart auf die Klinke 24 zu wirken, dass beim Verschwenken der Lehne 3 die Klinke 24 durch den Mitnehmer 26 nicht erfasst wird und die Lehne 3 über die Easy-Entry-Stellung hinweg verschwenkbar ist.

Der Fahrzeugsitz 1 weist wenigstens einen verriegelbaren Beschlag auf. Im Falle, dass lediglich genau ein verriegelbarer Beschlag zur Anlenkung der Lehne 3 am hinteren Fuß 2 vorgesehen ist, ist auf der dem Beschlag gegenüberliegenden Seite des Fahrzeugsitzes 1 ein nicht verriegelbares Lehnenlager angeordnet. Im Falle, dass sowohl an einer linken Seite des Fahrzeugsitzes 1 und an einer rechten Seite des Fahrzeugsitzes 1 jeweils ein verriegelbarer Beschlag angeordnet ist, sind diese in an sich bekannter Weise mittels einer Übertragungsstange miteinander verbunden, so dass ein Entriegeln des einen Beschlages stets zu einem Entriegeln des jeweils anderen Beschlages führt.

Zum Betätigen einer Easy-Entry-Funktion ist am oberen Ende der Lehne 3 ein Handgriff 5 vorgesehen, welcher dazu eingerichtet ist, auf eine Verriegelung des Beschlages zu wirken, um die Verriegelung bei Betätigung des Handgriffs 5 zu entriegeln und die Lehne 3 für ein Verschwenken in die Easy-Entry-Stellung relativ zum hinteren Fuß 2 frei zu geben.

Im zuvor beschriebenen Fall mit nur einem verriegelbaren Beschlag, kann ferner eine Übertragungsstange vorgesehen sein, welche eine Entriegelung des Beschlages mittels eines an der beschlagsfernen Seite des Fahrzeugsitzes 1 angeordneten Betätigungshebels 22 ermöglicht. Der Betätigungshebel 22 ist derart mit der Übertragungsstange verbunden, dass eine Drehbewegung des Betätigungshebels 22 zur Entriegelung des Beschlages auf die Übertragungsstange übertragen wird, eine Drehbewegung der Übertragungsstange durch eine Entriegelung des Beschlages mittels des Handgriffs 5 jedoch nicht auf den Betätigungshebel 22 übertragen wird.

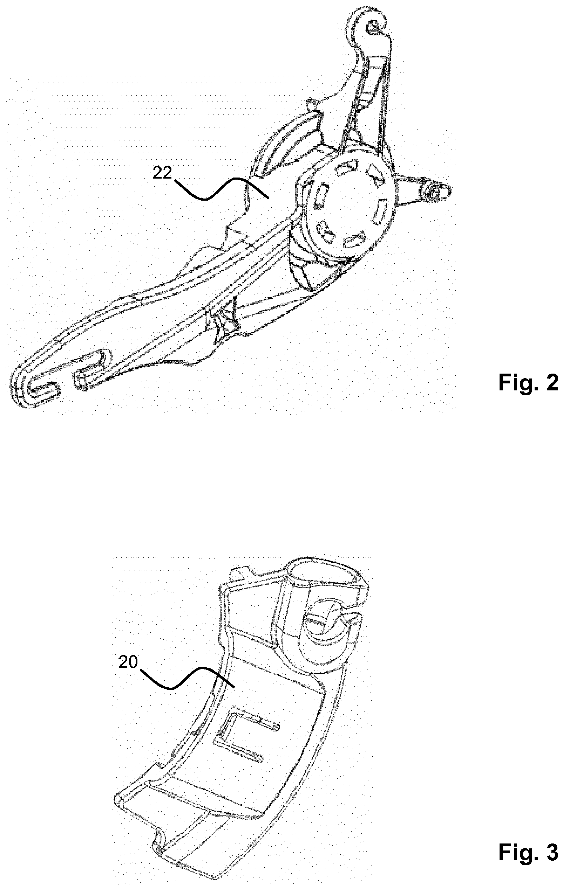

In Fig. 2 ist ein Betätigungshebel 22 gemäß einer möglichen Ausführungsform der Erfindung dargestellt. Der Betätigungshebel 22 dient der Überführung des Fahrzeugsitzes 1 in eine Bodenstellung. Der Betätigungshebel 22 ist, zum Auslösen bzw. Betätigen von einer dem Fahrzeugsitz 1 entfernten Position des Laderaumes eines Kraftfahrzeuges aus, mit einem nicht dargestellten Zugmittel verbindbar.

In Fig. 3 ist ein Zugelement 20 gemäß einer möglichen Ausführungsform der Erfindung dargestellt.

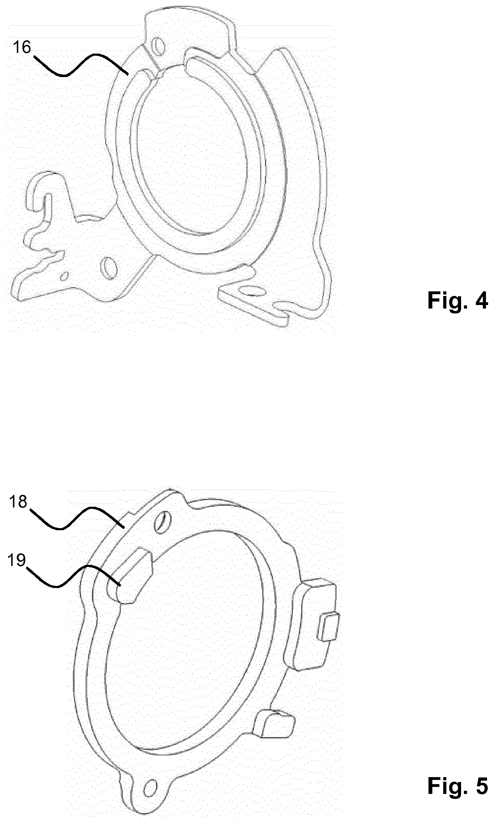

In Fig. 4 ist eine Grundplatte 16 gemäß einer möglichen Ausführungsform der Erfindung dargestellt.

In Fig. 5 ist das Antriebselement 18 gemäß einer möglichen Ausführungsform der Erfindung dargestellt. Das Antriebselement 18 weist vorliegend einen Nocken 19 auf, welcher mit der Klinke 24 zusammenwirkt.

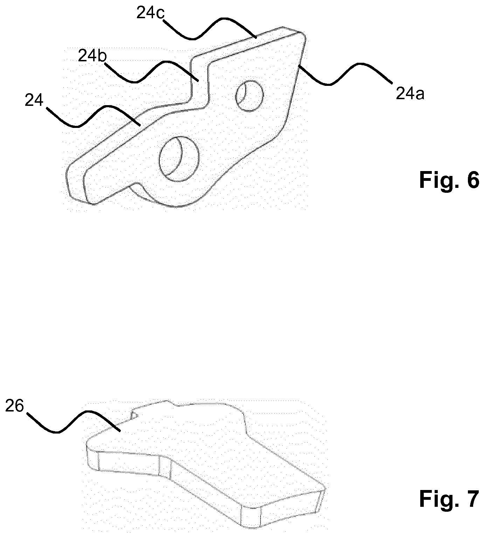

In Fig. 6 ist die Klinke 24 gemäß einer möglichen Ausführungsform der Erfindung dargestellt. Die Klinke 24 weist vorliegend eine erste Kontur 24a auf, an welcher der Mitnehmer 26 beim Vorschwenken der Lehne 3 in die Easy-Entry-Stellung mit der Klinke 24 in Kontakt tritt. Weiter weist die Klinke 24 eine zweite Kontur 24b und eine dritte Kontur 24c auf.

In Fig. 7 ist der Mitnehmer 26 gemäß einer möglichen Ausführungsform der Erfindung dargestellt.

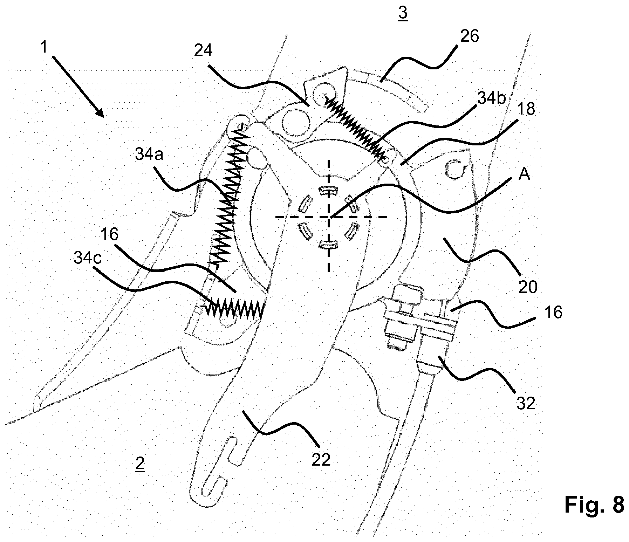

In Fig. 8 ist ein Teilausschnitt des Fahrzeugsitzes 1 in einer Grundstellung dargestellt. Die Lehne 3 ist hierbei bevorzugt in einer üblicherweise auch als Gebrauchsstellung bezeichneten Position angeordnet, welche dazu geeignet ist, dass ein Insasse in dem Fahrzeugsitz 1 befördert werden kann.

Die Lehne 3 ist in eine zur leichteren Zugänglichkeit einer hinteren Sitzreihe einnehmbare Easy-Entry-Stellung verschwenkbar. Ferner ist die Klinke 24 vorgesehen, welche beim Verschwenken der Lehne 3 in die Easy-Entry-Stellung von einem an der Lehne 3 angeordneten Mitnehmer 26 erfassbar ist und hierdurch der Bewegung der Lehne 3 folgend mitführbar ist. Ferner ist der Betätigungshebel 22 vorgesehen. Der Betätigungshebel 22 ist dazu eingerichtet, bei betätigtem Betätigungshebel 22 derart auf die Klinke 24 zu wirken, dass beim Verschwenken der Lehne 3 die Klinke 24 durch den Mitnehmer 26 nicht erfasst wird und die Lehne 3 über die Easy-Entry-Stellung hinweg verschwenkbar ist.

Die Grundplatte 16 ist vorliegend zumindest mittelbar drehfest mit dem hinteren Fuß 2, insbesondere mit einem Seitenteil des als Rahmenstruktur ausgebildeten hinteren Fuß 2, verbunden. Der Mitnehmer 26 ist zumindest mittelbar drehfest mit der Lehne 3, insbesondere mit einem Seitenteil der als Rahmenstruktur ausgebildeten Lehne 3, verbunden. Das Antriebselement 18 ist drehbar um die Lehnendrehachse A gelagert. Die Lehnendrehachse A verläuft gemäß der Darstellung von Fig. 8 mittig durch das Antriebselement 18 und tritt aus der Bildebene senkrecht hervor. An der Grundplatte 16 ist ferner ein Ende eines Bowdenzugs 32 angeordnet, welcher mit dem Zugelement 20 verbunden ist und bei einer Bewegung des Zugelements 20 um die Lehnendrehachse betätigt wird. Der Bowdenzug 32 ist mit seinem dem Zugelement 20 entfernten Ende mit der Schienenverriegelung 6 verbunden. Bei einer Betätigung des Bowdenzuges 32 wird die Schienenverriegelung 6 des Sitzschienenpaars 4 entriegelt. Das Zugelement 20 ist fest mit dem Antriebselement 18 verbunden. Das Zugelement 20 ist insbesondere auf einen kooperierenden Abschnitt des Antriebselements 18 aufgeclipst. Die Klinke 24 ist drehbar auf dem Antriebselement 18 gelagert.

Der Betätigungshebel 22 ist vorteilhafterweise mit Spiel mit der Übertragungsstange verbunden. Das Spiel zwischen dem Betätigungshebel 22 und der Übertragungsstange ist insbesondere vorgesehen, damit bei einer Betätigung der Entriegelung des einen Beschlages oder der gegebenenfalls vorhandenen zwei Beschläge, vorzugsweise zur Aktivierung einer Easy-Entry-Funktion mittels des Handgriffs 5, der Betätigungshebel 22 nicht bewegt wird.

Der Betätigungshebel 22 ist über ein erstes Federelement 34a mit der Grundplatte 16 und über ein zweites Federelement 34b mit der Klinke 24 verbunden. Das erste Federelement 34a ist bevorzugt eine Zugfeder, welche einer Rückführung des Betätigungshebels 22 in eine in Fig. 8 dargestellte Grundstellung dient. Das zweite Federelement 34b ist vorzugsweise eine Zug-Druck-Feder, welche eingerichtet ist, die Klinke 24 in eine ebenfalls in Fig. 8 dargestellte Grundstellung zu bewegen, wenn der Betätigungshebel 22 in seiner Grundstellung ist, und die Klinke 24 in eine von ihrer Grundstellung abweichende Stellung zu bewegen, wenn der Betätigungshebel 22 gegenüber der Grundstellung in eine Betätigungsrichtung 36 verschwenkt ist. Das Antriebselement 18 ist über ein drittes Federelement 34c mit der Grundplatte 16 verbunden. Das dritte Federelement 34c ist bevorzugt eine Zugfeder und dient der Rückführung des Antriebselements 18 in eine Grundstellung, wie sie in Fig. 8 gezeigt ist.

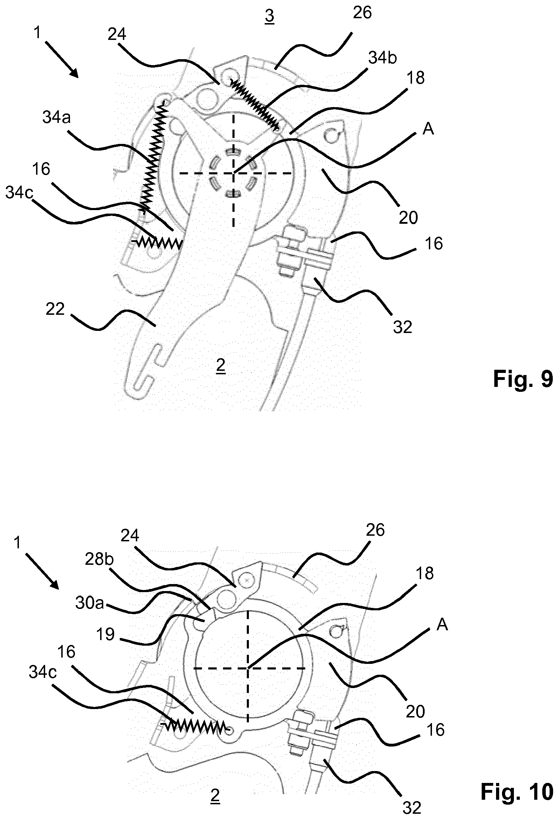

Die Figuren 9 bis 12 zeigen einen Teilausschnitt eines erfindungsgemäßen Fahrzeugsitzes 1 in unterschiedlichen Zuständen während der Betätigung einer Easy-Entry-Funktion und werden nachfolgend gemeinsam beschrieben.

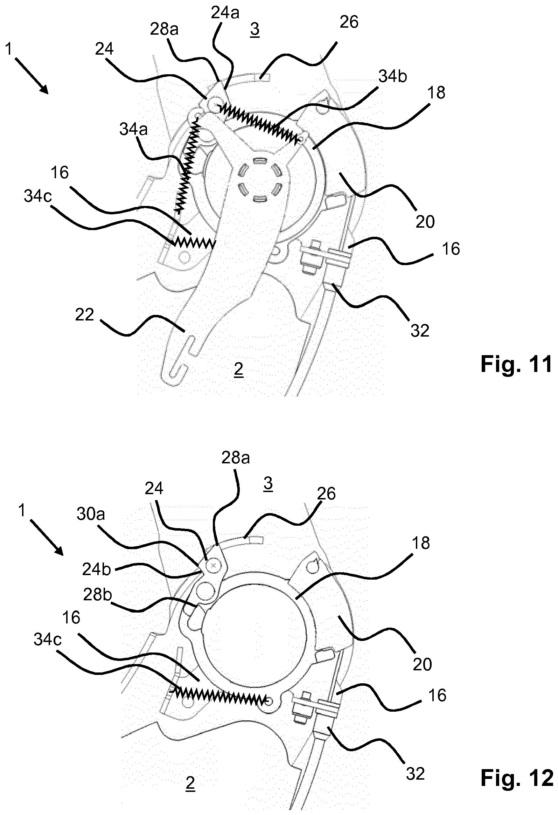

Bei der Easy-Entry-Stellung soll ein Einstieg in eine hintere Sitzreihe erleichtert werden. Die Easy-Entry-Stellung ist in den Figuren 11 und 12 anhand der verschwenkten Lehne 3 gezeigt. Beim Betätigen der Easy-Entry-Funktion wird der Beschlag und das zur Längseinstellung vorgesehenen Sitzschienenpaar 4 entriegelt, wodurch die Lehne 3 bis zur Easy-Entry-Stellung in Blickrichtung eines Insassen des Fahrzeugsitzes 1 betrachtet nach vorne geklappt werden kann, um einen maximalen Einstiegbereich zu ermöglichen.

Über einen nicht abgebildeten, jedoch an sich bekannten Mechanismus, beispielsweise einem Bowdenzug zwischen Handgriff 5 und dem Beschlag oder der Übertragungsstange, wird der Beschlag entriegelt. Da der Betätigungshebel 22 mit Spiel mit der Übertragungsstange verbunden ist, bewegt sich der Betätigungshebel 22 bei der Entriegelung des Beschlags zur Ausführung einer Easy-Entry-Funktion nicht.

Beim Abklappen der Lehne 3 gelangt der Mitnehmer 26 an einem ersten Kontaktpunkt 28a mit der Klinke 24 - welche sich in der Grundstellung der Klinke 24 befindet -, insbesondere mit der ersten Kontur 24a der Klinke 24, in Kontakt und nimmt diese in seiner Bewegung mit, bis die Klinke 24, insbesondere die zweite Kontur 24b der Klinke 24, auf einen an dem hinteren Fuß 2 integrierten ersten Endanschlag 30a auftrifft. Der erste Endanschlag 30a definiert eine erste Grenze des Schwenkbereichs der Lehne 3 in der Easy-Entry-Stellung.

Während der Mitnahme der Klinke 24 stützt sich die Klinke 24 mit einem dem Mitnehmer 26 entfernten Abschnitt über einen zweite Kontaktpunkt 28b an dem Nocken 19 des Antriebselements 18 ab und treibt das Antriebselement 18 entsprechend der Schwenkbewegung der Lehne 3 an. Wird das Antriebselement 18 und das mit dem Antriebselement 18 verbundene Zugelement 20 entsprechend der Schwenkbewegung der Lehne 3 gedreht, wird der Bowdenzug 32 betätigt. Der Bowdenzug 32 wirkt bestimmungsgemäß auf die Verriegelungsvorrichtung 6 des Sitzschienenpaars 4 und entriegelt diese. In der Easy-Entry-Stellung wird der Beschlag vorteilhafterweise nicht verriegelt, sondern durch ein sogenanntes Soft-Lock-System, wie es beispielsweise in der DE 10 2014 206 537 A1 beschrieben ist, in der Easy-Entry-Stellung gehalten.

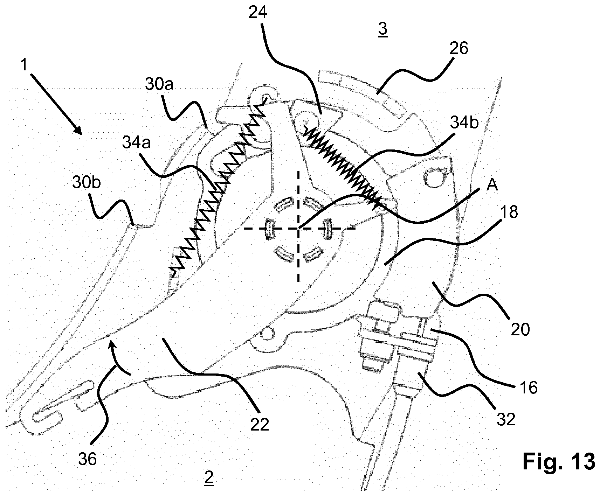

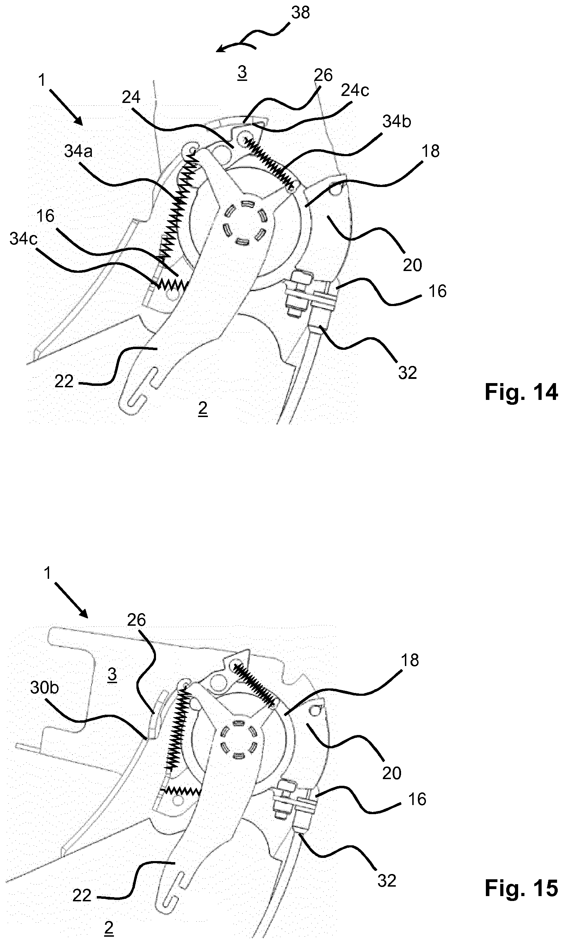

Die Figuren 13 bis 15 zeigen jeweils einen Teilausschnitt eines erfindungsgemäßen Fahrzeugsitzes 1 in unterschiedlichen Zuständen während der Betätigung einer Funktion zur Einnahme einer Bodenstellung und werden nachfolgend gemeinsam beschrieben.

Die sogenannte Bodenstellung (auch als Fold-Flat-Stellung bezeichnet) dient üblicherweise einer Vergrößerung des Laderaumes eines Kraftfahrzeugs. In der Bodenstellung ist die Lehne 3 vollständig abgeklappt, um einen möglichst ebenen Ladeboden zu erreichen. Hierbei wird die Lehne 3, insbesondere inklusive des hinteren Fuß 2 des Fahrzeugsitzes 1, bevorzugt derart in einen Fahrzeugboden eingebracht, dass die Lehne 3 mit ihrer Rückseite nach Möglichkeit eine in den übrigen Lageraumboden übergehende, möglichst ebene Fläche bildet.

Wie bei der Einnahme der Easy-Entry-Stellung ist es vorgesehen, dass der Beschlag zwecks einem Verschwenken der Lehne 3 entriegelt wird. Im Gegensatz zur Easy-Entry-Stellung ist es hierbei jedoch nicht vorgesehen, dass eine Entriegelung des Sitzschienenpaars 4 erfolgt. Zudem soll eine Begrenzung der Bewegung der Lehne 3 in Vorwärtsschwenkrichtung 38 durch die Abstützung der Klinke 24 zwischen dem Endanschlag 30a und dem Mitnehmer 26 verhindert werden.

Um eine Entriegelung der Beschläge ohne eine entsprechende Entriegelung des Sitzschienenpaars 4 zu ermöglichen, ist der Betätigungshebel 22 vorgesehen, welcher zum Einnehmen einer Bodenstellung entsprechend der Betätigungsrichtung 36 um die Lehnendrehachse A gedreht wird. Hierdurch werden die Beschläge entriegelt. Über das zweite Federelement 34b wird die Klinke 24 derart verschwenkt, dass die Klinke 24 aus dem Verfahrweg des Mitnehmers 26 der Lehne 3 herausgeschwenkt wird und dieser in Vorwärtsschwenkrichtung 38 an der Klinke 24 vorbeischwenken kann, bis die Lehne 3 mit einem Endanschlag 30b des hinteren Fuß 2 in Kontakt gelangt.

Beim Abklappen der Lehne 3 und Loslassen des Betätigungshebels 22 werden der Betätigungshebel 22 und die Klinke 24 mittels des ersten Federelements 34a und des zweiten Federelements 34b in ihre jeweilige Grundstellung zurückbewegt. In der Bodenstellung ist es vorgesehen, dass der Beschlag wieder verriegelt, um den Fahrzeugsitz 1 in der Bodenstellung zu halten.

Um die Lehne 3 aus der Bodenstellung wieder aufzurichten, muss der Betätigungshebel 22 erneut in Betätigungsrichtung 36 bewegt werden, um den Beschlag zu entriegeln. Anschließend kann die Lehne 3 aufgerichtet werden. Beim Aufrichten der Lehne 3 und entsprechendem Zurückschwenken der Lehne 3 entgegen der Vorwärtsschwenkrichtung 38, trifft der Mitnehmer 26 auf die Klinke 24, insbesondere auf die dritte Kontur 24c der Klinke 24, und drückt diesen kurzzeitig nach unten, um an der Klinke 24 vorbei zu verschwenken. Die dritte Kontur 24c der Klinke 24 ist hierbei in der Grundstellung der Klinke 24 zur Bildung einer Anlaufkontur in einem schrägen Winkel zur Bewegungsrichtung des Mitnehmers 26 angestellt, derart, dass der Mitnehmer 26 bevorzugt mittig auf die dritte Kontur 24c auftrifft und die Klinke 24 um ihre drehbare Lagerung verschwenkt.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.
In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: hinterer Fuß
- 3: Lehne
- 4: Sitzschiene
- 5: Handgriff
- 6: Verriegelungsvorrichtung
- 7: Sitzteil
- 16: Grundplatte
- 18: Antriebselement
- 19: Nocken (des Antriebselements 18)
- 20: Zugelement
- 22: Betätigungshebel
- 24: Klinke
- 24a: erste Kontur
- 24b: zweite Kontur
- 24c: dritte Kontur
- 26: Mitnehmer
- 28a: erster Kontaktpunkt
- 28b: zweiter Kontaktpunkt
- 30a: Endanschlag
- 30b: Endanschlag
- 32: Bowdenzug
- 34a: erstes Federelement
- 34b: zweites Federelement
- 34c: drittes Federelement
- 36: Betätigungsrichtung
- 38: Vorwärtsschwenkrichtung

## Patentansprüche

1. Fahrzeugsitz (1), insbesondere Kraftfahrzeugsitz, mit einem hinteren Fuß (2), einer gegenüber dem hinteren Fuß (2) um eine Lehnendrehachse (A) schwenkbaren Lehne (3), mindestens einem Sitzschienenpaar (4) zur Längsverstellung des Fahrzeugsitzes (1), einer Verriegelungsvorrichtung (6) zur Verriegelung des mindestens einen Sitzschienenpaars (4), wobei zur Anlenkung der Lehne (3) an dem hinteren Fuß (2) wenigstens ein verriegelbarer Beschlag vorgesehen ist, und die Lehne (3) in eine zur leichteren Zugänglichkeit einer hinteren Sitzreihe einnehmbare Easy-Entry-Stellung verschwenkbar ist,
**dadurch gekennzeichnet,**
**dass** der Fahrzeugsitz (1) ein im Wesentlichen ringförmiges Antriebselement (18) aufweist, welches um die Lehnendrehachse (A) relativ zur Lehne (3) drehbar gelagert ist und an welchem eine Klinke (24) angeordnet ist,
wobei die Klinke (24) beim Verschwenken der Lehne (3) in die Easy-Entry-Stellung, von einem an der Lehne (3) angeordneten Mitnehmer (26) erfassbar ist und hierdurch der Bewegung der Lehne (3) folgend mitführbar ist, und
**dass** ein Betätigungshebel (22) vorgesehen ist und mittels des Betätigungshebels (22) auf die Klinke (24) einwirkbar ist, so dass beim Verschwenken der Lehne (3) die Klinke (24) durch den Mitnehmer (26) nicht erfassbar ist und die Lehne (3) über die Easy-Entry-Stellung hinweg verschwenkbar ist.

2. Fahrzeugsitz (1) gemäß Anspruch 1, wobei die Klinke (24) drehbar gelagert ist.

3. Fahrzeugsitz (1) gemäß einem der Ansprüche 1 oder 2, wobei an dem Antriebselement (18) ein Zugelement (20) angeordnet ist, welches zum Betätigen der Verriegelungsvorrichtung (6) des Sitzschienenpaars (4) auf einen Bowdenzug (32) wirkt.

4. Fahrzeugsitz (1) gemäß Anspruch 3, wobei das Zugelement (20) auf einen kooperierenden Abschnitt des Antriebselements (18) aufgeclipst ist.

5. Fahrzeugsitz (1) gemäß einem der Ansprüche 3 oder 4, wobei an der Grundplatte (16) ein Endabschnitt einer Hülle eines Bowdenzugs (32) gehalten ist, welcher mit dem Zugelement (20) verbunden ist.

6. Fahrzeugsitz (1) gemäß einem der Ansprüche 1 bis 5, wobei an dem hinteren Fuß (2) eine Grundplatte (16) zur Lagerung des Antriebselements (18) angeordnet ist.

7. Fahrzeugsitz (1) gemäß einem der Ansprüche 1 bis 6, wobei der Betätigungshebel (22) mittels eines ersten Federelements (34a) in Richtung einer Grundstellung des Betätigungshebels (22) vorgespannt ist.

8. Fahrzeugsitz (1) gemäß Anspruch 7, wobei das erste Federelement (34a) eine Zugfeder ist.

9. Fahrzeugsitz (1) gemäß einem der Ansprüche 1 bis 8, wobei die Klinke (24) mittels eines zweiten Federelements (34b) mit dem Betätigungshebel (22) verbunden ist, wobei das zweite Federelement (34b) die Klinke (24) als Druckfeder wirkend in eine Grundstellung der Klinke (24) bewegt, wenn der Betätigungshebel (22) in seiner Grundstellung ist, und wobei das zweite Federelement (34b) die Klinke 24 als Zugfeder wirkend in eine von ihrer Grundstellung abweichende Stellung bewegt, wenn der Betätigungshebel (22) gegenüber seiner Grundstellung in eine Betätigungsrichtung (36) verschwenkt ist.

10. Fahrzeugsitz (1) gemäß einem der Ansprüche 1 bis 9, wobei das Antriebselement (18) mittels eines dritten Federelements (34c) in Richtung einer Grundstellung des Betätigungshebels (22) vorgespannt ist.

11. Fahrzeugsitz (1) gemäß Anspruch 10, wobei das dritte Federelement (34c) eine Zugfeder ist.

12. Fahrzeugsitz (1) gemäß einem der Ansprüche 1 bis 11, wobei die Klinke (24), zur Begrenzung des Verschwenkens der Lehne (3), in der Easy-Entry-Stellung an einem Endanschlag (30a) anliegt.

13. Fahrzeugsitz (1) gemäß einem der Ansprüche 1 bis 12, wobei der Mitnehmer (26), zur Begrenzung des Verschwenkens der Lehne (3), in einer Bodenstellung an einem Endanschlag (30b) anliegt.

## Claims

1. Vehicle seat (1), in particular motor vehicle seat, having a rear base (2), a backrest (3) which can be pivoted with respect to the rear base (2) about a backrest rotation axis (A), at least one seat rail pair (4) for longitudinal adjustment of the vehicle seat (1), a locking device (6) for locking the at least one seat rail pair (4), wherein at least one lockable fitting is provided in order to articulate the backrest (3) to the rear base (2), and the backrest (3) can be pivoted into an easy-entry position which can be assumed for easier accessibility of a rear seat row,
**characterized in that**
the vehicle seat (1) has a substantially annular drive element (18), which is rotatably supported about the backrest rotation axis (A) relative to the backrest (3) and on which a detent (24) is arranged, wherein the detent (24), when the backrest (3) is pivoted into the easy-entry position, can be held by a carrier (26) which is arranged on the backrest (3) and can thereby also be carried so as to follow the movement of the backrest (3), and
**in that** an actuation lever (22) is provided and by means of the actuation lever (22) the detent (24) can be acted on in such a manner that, when the backrest (3) is pivoted, the detent (24) cannot be held by the carrier (26) and the backrest (3) can be pivoted beyond the easy-entry position.

2. Vehicle seat (1) according to Claim 1, wherein the detent (24) is rotatably supported.

3. Vehicle seat (1) according to either Claim 1 or Claim 2, wherein there is arranged on the drive element (18) a pulling element (20) which acts on a Bowden cable (32) in order to actuate the locking device (6) of the seat rail pair (4).

4. Vehicle seat (1) according to Claim 3, wherein the pulling element (20) is clip-fitted to a cooperating portion of the drive element (18).

5. Vehicle seat (1) according to either Claim 3 or 4, wherein there is retained on the base plate (16) an end portion of a sheath of a Bowden cable (32) which is connected to the pulling element (20).

6. Vehicle seat (1) according to one of Claims 1 to 5, wherein a base plate (16) for supporting the drive element (18) is arranged on the rear base (2).

7. Vehicle seat (1) according to one of Claims 1 to 6, wherein the actuation lever (22) is pretensioned by means of a first resilient element (34a) in the direction of a basic position of the actuation lever (22).

8. Vehicle seat (1) according to Claim 7, wherein the first resilient element (34a) is a tension spring.

9. Vehicle seat (1) according to one of Claims 1 to 8, wherein the detent (24) is connected to the actuation lever (22) by means of a second resilient element (34b), wherein the second resilient element (34b) acting as a pressure spring moves the detent (24) into a basic position of the detent (24) when the actuation lever (22) is in the basic position thereof, and wherein the second resilient element (34b) acting as a tension spring moves the detent (24) into a position which differs from the basic position thereof when the actuation lever (22) is pivoted with respect to the basic position thereof in an actuation direction (36).

10. Vehicle seat (1) according to one of Claims 1 to 9, wherein the drive element (18) is pretensioned by means of a third resilient element (34c) in the direction of a basic position of the actuation lever (22).

11. Vehicle seat (1) according to Claim 10, wherein the third resilient element (34c) is a tension spring.

12. Vehicle seat (1) according to one of Claims 1 to 11, wherein the detent (24), in order to limit the pivoting of the backrest (3), is in abutment with an end stop (30a) in the easy-entry position.

13. Vehicle seat (1) according to one of Claims 1 to 12, wherein the carrier (26), in order to limit the pivoting of the backrest (3), is in abutment in a floor position with an end stop (30b).

## Revendications

1. Siège de véhicule (1), en particulier siège de véhicule automobile, comprenant un pied arrière (2), un dossier (3) pouvant pivoter autour d'un axe de rotation de dossier (A) par rapport au pied arrière (2), au moins une paire de rails de siège (4) pour le réglage longitudinal du siège de véhicule (1), un dispositif de verrouillage (6) pour le verrouillage de l'au moins une paire de rails de siège (4), au moins une ferrure verrouillable étant prévue pour l'articulation du dossier (3) au pied arrière (2), et le dossier (3) pouvant être pivoté dans une position d'accès aisé pouvant être adoptée pour faciliter l'accès à une rangée de sièges arrière,
**caractérisé en ce que**
le siège de véhicule (1) présente un élément d'entraînement de forme essentiellement annulaire (18) qui est supporté de manière à pouvoir tourner autour de l'axe de rotation de dossier (A) par rapport au dossier (3) et au niveau duquel est disposé un cliquet (24), le cliquet (24), lors du pivotement du dossier (3) dans la position d'accès aisé, pouvant être saisi par un dispositif d'entraînement (26) disposé au niveau du dossier (3) et de ce fait pouvant être entraîné en suivant le mouvement du dossier (3), et **en ce qu'**un levier d'actionnement (22) est prévu, et le levier d'actionnement (22) permet d'agir sur le cliquet (24) de telle sorte que lors du pivotement du dossier (3), le cliquet (24) ne puisse pas être saisi par le dispositif d'entraînement (26) et le dossier (3) puisse être pivoté au-delà de la position d'accès aisé.

2. Siège de véhicule (1) selon la revendication 1, dans lequel le cliquet (24) est supporté de manière rotative.

3. Siège de véhicule (1) selon l'une quelconque des revendications 1 ou 2, dans lequel un élément de traction (20) est disposé au niveau de l'élément d'entraînement (18), lequel agit sur un câble Bowden (32) de manière à actionner le dispositif de verrouillage (6) de la paire de rails de siège (4) .

4. Siège de véhicule (1) selon la revendication 3, dans lequel l'élément de traction (20) est encliqueté sur une portion coopérante de l'élément d'entraînement (18).

5. Siège de véhicule (1) selon l'une quelconque des revendications 3 et 4, dans lequel une portion d'extrémité d'une gaine d'un câble Bowden (32) est retenue au niveau de la plaque de base (16), laquelle est connectée à l'élément de traction (20) .

6. Siège de véhicule (1) selon l'une quelconque des revendications 1 à 5, dans lequel une plaque de base (16) pour le support de l'élément d'entraînement (18) est disposée au niveau du pied arrière (2).

7. Siège de véhicule (1) selon l'une quelconque des revendications 1 à 6, dans lequel le levier d'actionnement (22) est précontraint au moyen d'un premier élément de ressort (34a) dans la direction d'une position de base du levier d'actionnement (22) .

8. Siège de véhicule (1) selon la revendication 7, dans lequel le premier élément de ressort (34a) est un ressort de traction.

9. Siège de véhicule (1) selon l'une quelconque des revendications 1 à 8, dans lequel le cliquet (24) est connecté au moyen d'un deuxième élément de ressort (34b) au levier d'actionnement (22), le deuxième élément de ressort (34b) déplaçant le cliquet (24) dans une position de base du cliquet (24) en agissant en tant que ressort de compression, lorsque le levier d'actionnement (22) est dans sa position de base, et le deuxième élément de ressort (34b) déplaçant le cliquet (24) dans une position s'écartant de sa position de base en agissant en tant que ressort de traction, lorsque le levier d'actionnement (22) est pivoté par rapport à sa position de base dans une direction d'actionnement (36).

10. Siège de véhicule (1) selon l'une quelconque des revendications 1 à 9, dans lequel l'élément d'entraînement (18) est précontraint au moyen d'un troisième élément de ressort (34c) dans la direction d'une position de base du levier d'actionnement (22).

11. Siège de véhicule (1) selon la revendication 10, dans lequel le troisième élément de ressort (34c) est un ressort de traction.

12. Siège de véhicule (1) selon l'une quelconque des revendications 1 à 11, dans lequel le cliquet (24), pour limiter le pivotement du dossier (3), s'applique, dans la position d'accès aisé, contre une butée de fin de course (30a).

13. Siège de véhicule (1) selon l'une quelconque des revendications 1 à 12, dans lequel le dispositif d'entraînement (26), pour limiter le pivotement du dossier (3), s'applique, dans une position au sol, contre une butée de fin de course (30b).
